# NEUE EUROPÄISCHE PATENTSCHRIFT

(11) **EP 0 838 324 B2**
(45) Veröffentlichungstag und Bekanntmachung des Hinweises auf die Entscheidung über den Einspruch: **09.07.2008**
(45) Hinweis auf die Patenterteilung: 16.02.2005
(21) Anmeldenummer: 97117744.9
(22) Anmeldetag: 14.10.1997
(51) Int. Cl.: B29C 65/20, E06B 3/96, B29C 65/00

(54) **Verfahren und Vorrichtung zum Verschweissen von auf Gehrung geschnittenen Rahmenprofilen aus Kunststoff mit eingezogenen Dichtungen**
Process and apparatus for welding of mitre cut plastics frame profiles with incorporated seals
Procédé et appareil pour le soudage de profilés, coupés en onglet et comportant des joints d'étanchéité incorporés, pour la fabrication de cadres en matière plastique

(30) Priorität: 24.10.1996 DE 19644183
(43) Veröffentlichungstag der Anmeldung: 29.04.1998
(73) Patentinhaber: SCHÜCO International KG, 33609 Bielefeld (DE)
(72) Erfinder: Valentin, Manfred, 32547 Bad Oeynhausen (DE)
(74) Vertreter: Stracke, Alexander

(56) Entgegenhaltungen:
- EP-A- 0 531 681
- DE-A- 2 316 749
- DE-A- 4 323 728
- DE-C- 3 405 384
- DE-C- 19 545 480
- US-A- 4 752 350
- US-A- 5 614 052

## Beschreibung

Die Erfindung bezieht sich auf ein Verfahren zum Verschweißen von auf Gehrung geschnittenen Rahmenprofilen aus Kunststoff mit eingezogenen, über die gesamte Profillänge sich erstreckenden, aus einem Befestigungsfuß und mindestens einer Dichtlippe bestehenden Dichtungen aus einem schweißbaren Material, vorzugsweise aus einem Thermoplasten, für Fenster oder Türen, bei dem die Gehrungsflächen und die benachbarten Rahmenprofilbereiche durch einen Schweißspiegel auf die Verschweißungstemperatur aufgeheizt werden, der Schweißspiegel aus dem Bereich der Gehrungsflächen entfernt wird und die Gehrungsflächen der Rahmenprofile zusammengepreßt werden.

Bei den bekannten Verfahren der eingangs genannten Art bilden sich im Gehrungsbereich Schweißraupen aus dem Material der Rahmenprofile und der Dichtungen. Hierbei findet eine Durchmischung von Dichtungsmaterial und Rahmenmaterial statt, durch die die elastischen Eigenschaften der Dichtung im Eckbereich erheblich eingeschränkt oder vollständig unterbunden werden.

Die DE 43 23 728 zeigt eine Vorrichtung zum Verschweißen von Fensterrahmen aus Kunststoff, bei der einzelne Profile zur Bildung eines Rahmens auf einem Tisch eingelegt werden. Die Kunststoffprofile werden im Gehrungsbereich erhitzt und anschließend miteinander verschweißt, wobei Außenanschläge zur Aufnahme einer Schweißbeilage vorgesehen sind. Dadurch wird das Entfernen der Schweißbeilage vereinfacht. Es ist nicht gezeigt, Kunststoffprofile zusammen mit einem Dichtungsprofil zu verschweißen.

Aus der DE 91 03 838 ist eine weitere Schweißvorrichtung für Fensterrahmen bekannt, bei der im Bereich der Gehrungsfläche Anschläge vorgesehen sind, um die beim Verschweißen entstehenden Schweißraupen leichter entfernen zu können. Dies verringert den Aufwand bei der nachträglichen Bearbeitung der gebildeten Rahmen, wobei auch hier an den Profilen keine Dichtungen verschweißt werden.

Die DE-C-3 405 384 zeigt ein Verfahren und vorrichtung zum verschweißen von Kunststoffprofile zusammen mit einem Dichtungsprofil.

Der Erfindung liegt die Aufgabe zugrunde, ein Verfahren der eingangs genannten Art so zu gestalten, daß die elastische Funktion der Dichtung im Eckbereich erhalten bleibt.

Erfindungsgemäß wird diese Aufgabe durch die Merkmale des kennzeichnenden Teils des Patentanspruches 1 gelöst.

Das die aus der Dichtlippe und dem Befestigungsfuß gebildete Innenkontur der Dichtung abdeckende Formteil verhindert während der Verschweißung der Rahmenprofile und der Dichtungen in diesem Bereich die Ausbildung einer Schweißraupe, so daß die Elastizität der Dichtung im Eckbereich nicht durch die Verschweißung negativ. beeinflußt wird, zumal die an der Außenseite der Dichtung entstehende Schweißraupe in einfacher Weise entfernt werden kann.

Bei einer vorteilhaften Ausbildung des erfindungsgemäßen Verfahrens kann für den Zeitraum der Verschweißung auch die Außenkontur der Dichtung benachbart der Gehrungsebene durch Formteile abgedeckt werden, wobei in der Gehrungsebene ein Spalt für den Austritt der Schweißraupe verbleibt. Nach der Verschweißung der Rahmenprofile und der Dichtungen werden die Formteile und die sich an der Außenseite der Dichtung gebildete Schweißraupe entfernt.

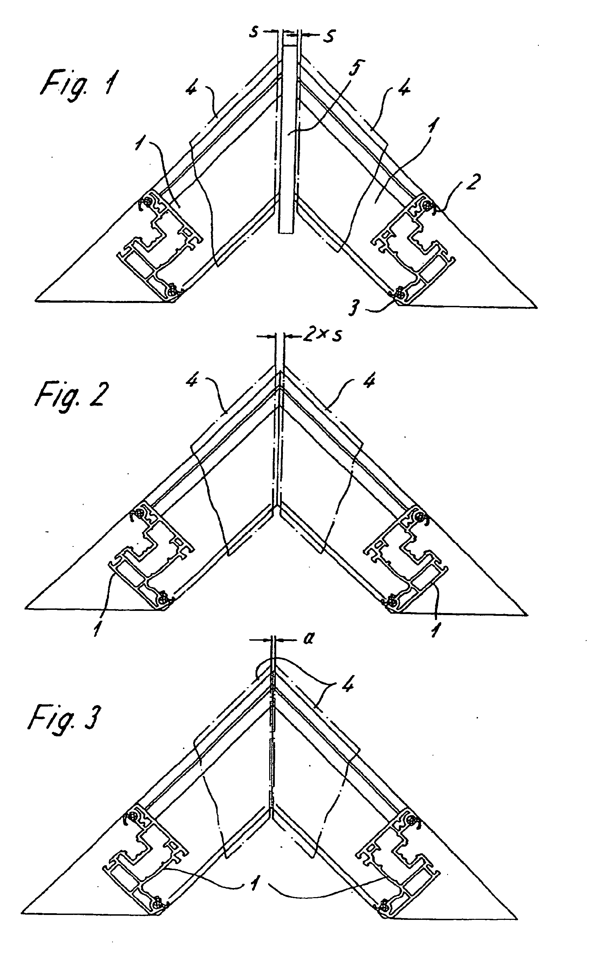

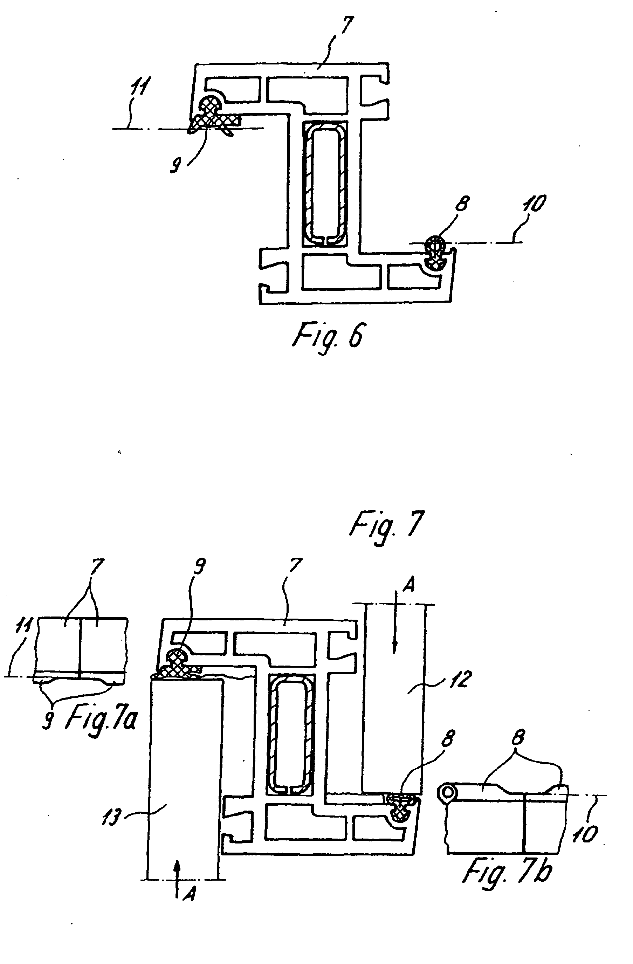

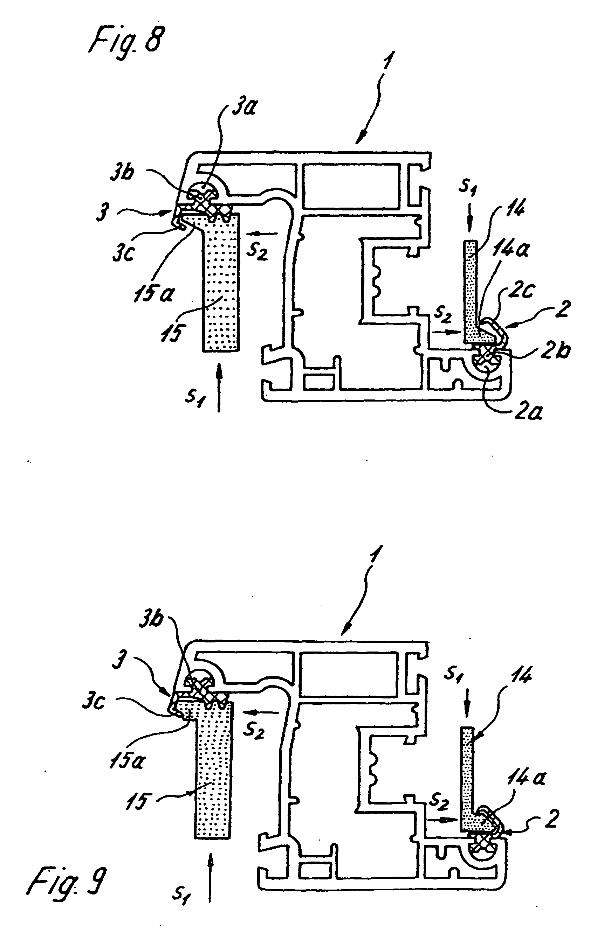

In den Fig. 1 bis 7 sowie 7a und 7b sind das bekannte Verfahren und die bekannten Vorrichtungen zur Durchführung des Verfahrens aufgezeigt, während das erfindungsgemäße Verfahren Gegenstand der Figuren 8 bis 17 sind.

In der Fig. 1 sind zwei zu verschweißende, auf Gehrung geschnittene Rahmenprofile 1 dargestellt, die als Kunststoffhohlprofile ausgebildet sind. In diese Rahmenprofile und zwar in entsprechende Verankerungsnuten sind Dichtungen 2,3 eingezogen, die sich über die gesamte Profillänge erstrecken.

Zur Herstellung der Rahmenecke werden die Rahmenprofile 1 auf einem Tisch einer Schweißmaschine angeordnet und in Vorrichtungen gehalten, die im wesentlichen Sicht- und Funktionsflächen der Rahmenprofile umgreifen. Diese umgreifenden Vorrichtungsteile 4 werden als Beilagen oder Schweißraupenbegrenzungen bezeichnet.

In der Fig. 1 liegen die Gehrungsflächen der Rahmenprofile 1 an einem Schweißspiegel 5 an, durch den die Gehrungsflächen und die angrenzenden Bereiche der Rahmenprofile aufgeheizt werden können. Die Wärmeübertragung erfolgt durch Wärmeleitung.

Die die Beilagen bzw. die Schweißraupenbegrenzungen bildenden Vorrichtungsteile 4 sind in einem Abstand S, der ca. 3 mm beträgt, zu der zu verschweißenden Profilgehrungsfläche angeordnet. Dieser Abstand bildet die sog. Schweißzugabe.

In der Fig. 2 ist der nächste Schritt des Schweißvorganges nach der Aufheizung der Gehrungsflächen und der anschließenden Profilbereiche durch den Schweißspiegel 5 dargestellt. In der Fig. 2 liegen die aufgeheizten Gehrungsflächen aneinander, so daß die Beilagen bzw. die Schweißraupenbegrenzungen im Abstand von 2S einander gegenüberstehen.

Der nächste Verfahrensschritt ist in der Fig. 3 aufgezeigt, bei dem die Gehrungsflächen gegeneinander gepreßt sind. Aufgrund der plastischen Verformung des durch Aufheizung plastifizierten Randmaterials werden die Rahmenprofile 2 in diesem Bereich so weit zusammengeführt, daß der verbleibende Spalt a zwischen den Vorrichtungsteilen 4, die die Beilagen bzw. Schweißraupenbegrenzungen bilden, nur noch 0,2 bis 0,3 mm beträgt.

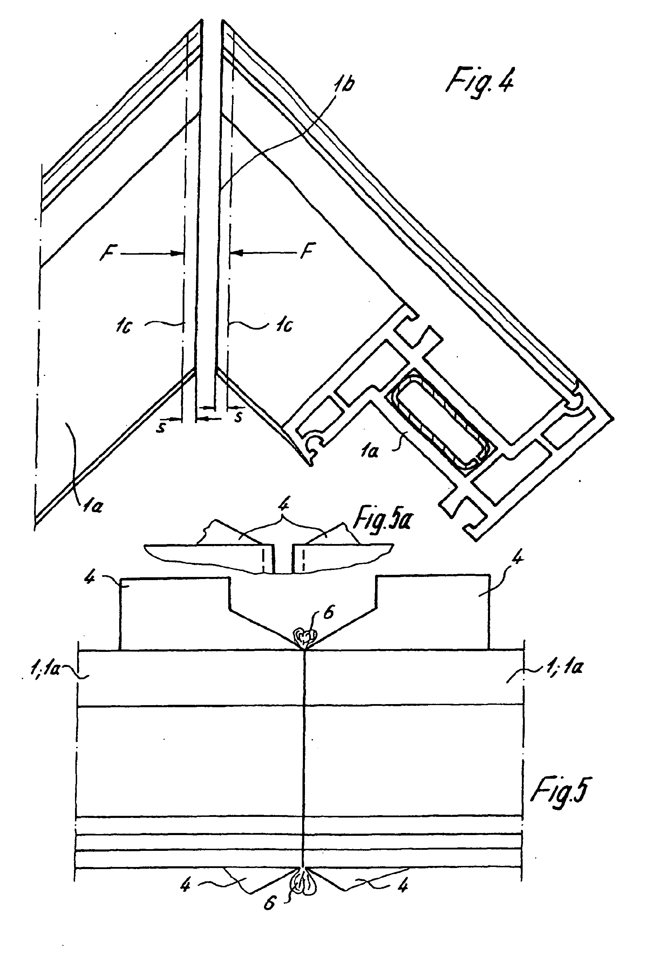

Die Fig. 4 zeigt zwei auf Gehrung geschnittene Rahmenprofile 1a, an deren Gehrungsflächen 1b sich die plastifizierbare und später zu verdrängende Schweißzugabe S sich anschließt sowie die Richtung der Schweißkräfte F, die ein Verdrängen des plastifizierten Materials bis zur Überdeckung der Linien 1c bewirken. Das während des Schweißvorganges verdrängte Material der plastifizierten Schweißzugabe S fließt z.T. in die Hohlkammern des Rahmenprofils 1 bzw. 1a und wird zu einem annähernd gleichen Teil nach außen über die Profilmantelflächen hinaus abgedrängt.

Ohne die die Beilagen bzw. Schweißraupenbegrenzungen bildenden Vorrichtungsteile 4 würde es zu weitreichenderen Profilformveränderungen im Eckbereich, d.h. im Schweißbereich, am Rahmenprofil kommen. Da das Material aber beim Verdrängen während des Schweißvorganges unmittelbar angrenzende Sammelräume benötigt, sind die die Beilagen bildenden Vorrichtungsteile 4 benachbart dem Schweißnahtbereich besonders ausgeformt.

In der Fig. 5 sind zwei im Gehrungsbereich verschweißte Rahmenprofile mit Blickrichtung längs der Gehrungsfuge dargestellt. Die die Beilagen bzw. Schweißraupenbegrenzungen bildenden Vorrichtungsteile 4 sind zur Schweißnaht bzw. zur Gehrung hin keilförmig auslaufend gestaltet und gehen am Ende nahezu in eine Spitze über.

Wie aus der Fig. 3 ersichtlich, bilden die Spitzen der die Schweißraupenbegrenzungen bildenden Vorrichtungsteile 4 einen Abstand von 0,2 bis 0,3 mm zueinander, so daß das nach außen verdrängte, plastifizierte Material annähernd herzförmig über die Spitze zueinander stehenden Schweißraupenbegrenzungen in den dadurch gebildeten Raum austreten.

Diese Schweißraupen 6, die ein erhebliches Volumen besitzen, sind an dem aus den Rahmenprofilen 1,1a gebildeten Rahmen einer Tür oder eines Fensters lediglich noch über einen dünnen Steg angebunden, der in einfacher Weise mechanisch und sauber abgeschert werden kann. Das Säubern einer geschweißten Ecke kann auch mit speziellen Maschinen oder Vorrichtungen vollautomatisch vorgenommen werden.

Derartige Schweißraupen bilden sich auch im Bereich der eingezogenen Dichtungen 2,3 und vermischen sich dort mit dem plastifizierten und verdrängten Material der Rahmenprofile. Die Durchmischung von Hart- und Weichwerkstoffen führt zu einem blockartigen, im wesentlichen unelastischen Bereich der miteinander in der Ecke verbundenen Dichtungen.

Die Fig. 6 zeigt ein Rahmenprofil 7, das mit einer Anschlagdichtung 8 und mit einer Glasanlagedichtung 9 ausgerüstet ist. Die Linie 10 gibt die Anschlagfläche des Rahmenprofiles an, mit dem das Rahmenprofil 7 im Gesamtfenster zusammenwirkt, während die Linie 11 die Fläche des Glases andeutet, an der sich die Dichtung 9 elastisch verformt.

Die die Beilagen bzw. Schweißraupenbegrenzungen bildenden Vorrichtungsteile werden im unmittelbaren Eckbereich der Dichtungen so ausgebildet, daß mittels Stempel 12,13 die Dichtungen 8,9 während des Schweißvorganges auf ein Maß komprimiert werden, das den Ebenen der Linien 10 und 11 entspricht. Nach dem Aushärten der verschweißten Ecke ergibt sich im Dichtungseckbereich eine harte, unelastische Dichtungsecke, die in den Fig. 7a und 7b aufgezeigt ist. Der unelastische Bereich liegt zu beiden Seiten der Gehrungsebene, die in den Fig. 7a und 7b durch die vertikale mittige Linie aufgezeigt ist.

Außerhalb des unelastischen Eckbereichs der Dichtungen 8 und 9 weisen diese die volle Elastizität und Federwirkung auf, die für die Dichtungsaufgaben erforderlich ist.

Für die Dichtigkeit von Fenstern, insbesondere im Bereich der aktiv wirkenden Dichtungen, wie zwischen Blend- und Flügelrahmen, sind gerade die Dichtungsecken von besonderer Bedeutung. Die Formtreue der Dichtung in der Gehrungsecke und vor allen Dingen die erforderliche Elastizität über den gesamten Wirkbereich der Dichtung ist für die einwandfreie Dichtigkeit solcher Elemente erforderlich.

Der Flügel und Blendrahmen eines Fensters oder einer Tür werden über Beschläge miteinander verbunden, die z.B. in Nuten der Rahmenprofile aber auch in besonders zu fertigenden Ausnehmungen in den Profilen angeordnet werden. Hierdurch entstehen Toleranzen, so daß die tatsächliche Anlageebene, z.B. der Dichtung 8 um die theoretische Anlagefläche 10 gemäß der Fig. 6 in beiden Richtungen schwanken kann.

Eine unelastische und vorgeformte Dichtungsecke kann diesen Toleranzen nicht folgen und führt somit zu Undichtigkeiten im Eckbereich aber auch zu Verformungen und Zwängen der Rahmenprofile und der Beschlagteile.

Der Gegenstand der Erfindung ist in den Fig. 8 bis 17 aufgezeigt und wird im folgenden beschrieben.

Die Fig. 8 zeigt ein Rahmenprofil 1 mit in Verankerungsnuten 2a und 3a eingezogenen Dichtungen 2 und 3, bei denen die Innenkontur der Dichtung, die vom Befestigungsfuß 2b bzw. 3b und von der Dichtlippe 2c und 3c bestimmt wird, durch ein als Stempel 14 bzw. 15 ausgebildetes Formteil abgedeckt wird.

In dem Ausführungsbeispiel nach der Fig. 8 und auch nach der Fig. 9 sind die Stempel 14,15 winkelförmig ausgebildet und weisen seitliche vorspringende Schenkel 14a und 15a auf. Diese Schenkel sind der Innenkontur der Dichtung 2 bzw. 3 angepaßt und stützen sich während des Verschweißens auf dem Befestigungsfuß 2b bzw. 3b ab. Die Schenkel 14a und 15a sind in dem Ausführungsbeispiel nach der Fig. 1 nicht vollständig der Innenkontur der Dichtung angepaßt und decken diese nicht formschlüssig vollständig ab, so daß sich eine Schweißraupe mit geringen Abmessungen im Bereich der Gehrungsecke der Dichtung bilden kann. Diese Schweißraupe mit geringen Abmessungen beeinträchtigt die Elastizität der Dichtung im Gehrungsbereich nur unwesentlich.

In dem Ausführungsbeispiel nach der Fig. 9 sind die Schenkel 14 und 15a der Stempel 14 und 15 so gestaltet, daß sie der Innenkontur der Dichtung 2 bzw. 3 flächenbündig angepaßt sind. Zu diesem Zweck weist der Schenkel 15a eine Ausnehmung zur Aufnahme der Dichtlippe 3c und zur Aufnahme von Vorsprüngen des Befestigungsfußes 3b auf.

Bei einer Abdeckung der Innenkontur der Dichtungen 2,3, wie diese in der Fig. 9 aufgezeigt ist, kann sich nur an der Außenseite der Dichtung in der Gehrungsecke eine Schweißraupe aus Dichtungsmaterial ausbilden, die jedoch sauber entfernt werden kann. Sofern der Gehrungsbereich der Dichtung schweißraupenfrei ist, wird die Funktion der elastischen Dichtung im Eckbereich nicht beeinträchtigt.

Der Stempel 14,15 kann in Richtung der Pfeile S1 und S2 in die Innenkontur der Dichtungen einschiebbar sein. Es besteht aber auch die Möglichkeit, die Stempel mit ihren Schenkeln 14a und 15a in den von der Innenkontur der Dichtungen begrenzten Raum einzuschwenken.

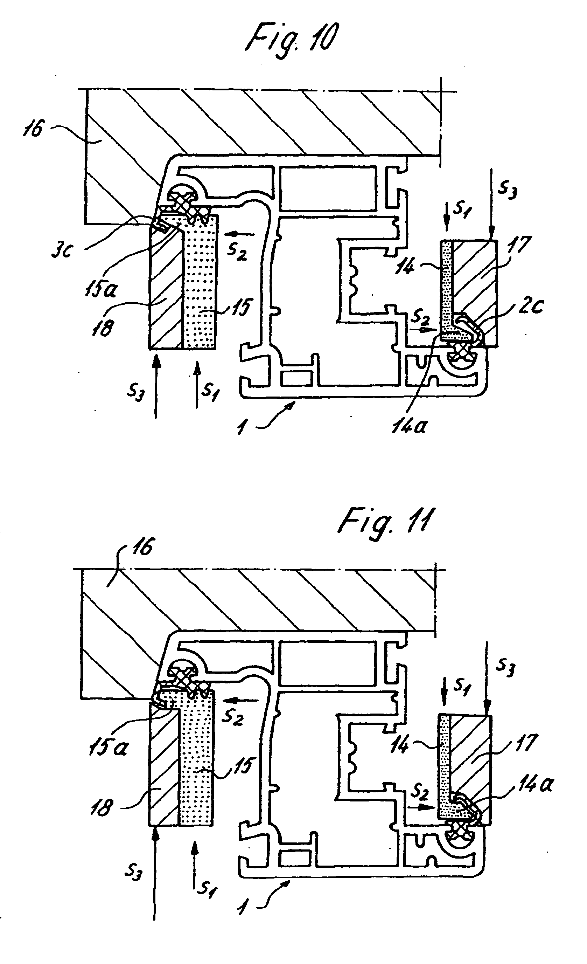

Der Stempel für die Abdeckung der Innenkontur der im Gehrungsbereich zusammenstoßenden Dichtungen in diesem Bereich kann einstückig oder mehrteilig ausgebildet sein. Die Fig. 10 entspricht der Fig. 8, jedoch ist dem Rahmenprofil an der Außenseite bzw. an der Sichtfläche ein Vorrichtungsteil 16, das eine Beilage bzw. eine Schweißraupenbegrenzung bildet, zugeordnet.

Die Schenkel 14a und 15a der Stempel 14 und 15 begrenzen ausschließlich den Dichtungsfuß und lassen im Innem der Dichtlippe eine Schweißraupe mit geringen Abmessungen zu.

Es sind ferner Abdeckteile 17,18 für die Außenkontur der Dichtlippen 2c und 3c den Stempeln zugeordnet, die mit entsprechenden Aussparungen zur anliegenden Aufnahme der Dichtlippen 2c,3c ausgerüstet sind. Durch die Abdeckteile 17,18, die in den dargestellten Ausführungsbeispielen nach der Fig. 10 und nach der Fig. 11 an den Stempeln 14,15 anlegen, wird die Qualität der Dichtungsecke nach dem Verschweißen in Hinsicht auf ihre elastischen Eigenschaften verbessert.

In der Fig. 11 sind die Schenkel 14a und 15a der Innenkontur der Dichtungen 2 und 3 eng angepaßt und auch, wie in der Fig. 9 dargestellt, mit Ausnehmungen zur Aufnahme von Dichtlippenteilen und von Vorsprüngen des Befestigungsfußes ausgerüstet, so daß im Innenraum der Dichtungen im Gehrungsbereich eine Schweißraupe aus Dichtungsmaterial nicht entstehen kann.

Aus den Ausführungsbeispielen nach den Fig. 10 und 11 ergibt sich, daß die Abdeckteile 17,18 für die Außenkontur der Dichtlippen während des Schweißvorganges sich an den seitlich vorspringenden Schenkeln der Stempel oder an einem Rahmenprofil abstützen können.

Der Schenkel des Stempels kann als ein der Gehrungsecke angepaßtes Winkelstück ausgebildet sein.

Die Bewegungsrichtungen bei der Montage der Stempel 14,15 und der Abdeckteile 17,18 sind durch die Pfeile S1, S2 und S3 in den Fig. 10 und 11 aufgezeigt.

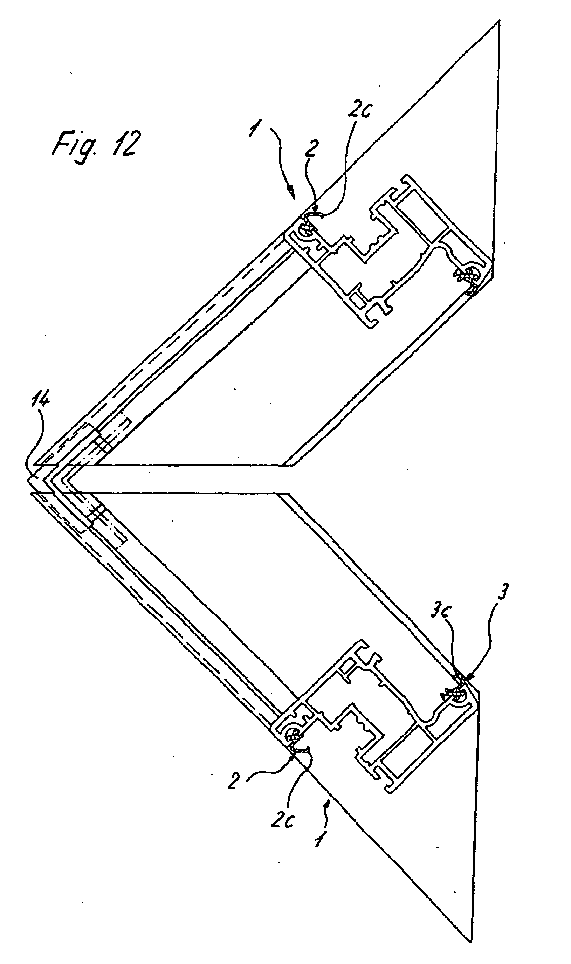

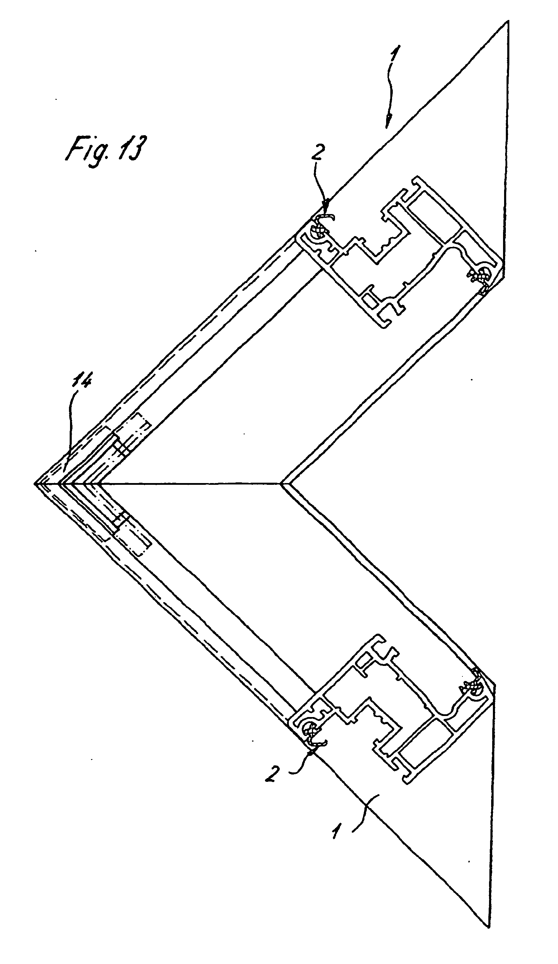

Die Fig. 12 zeigt eine Gehrungsecke, bei der Rahmenprofile 1 nach dem Plastifizierungsvorgang und der Wegnahme des Schweißspiegels 5 noch im Abstand der Breite des Schweißspiegels stehen. In dieser Betriebslage ist der Stempel 14 auf den Befestigungsfuß 2b aufgesetzt und unter die Dichtungslippe 2c gefahren und dort fixiert. Der winkelförmige Stempel 14 stützt sich dabei an Flächen der Beilagenteile 17 ab und wird so mit seinen Schenkeln durch die Anlage an den Beilagenteilen in die Endposition der verschweißten Ecke gemäß Fig. 13 geführt. Nach erfolgter Verschweißung wird der winkelförmige Stempel 14 in die dargestellte strichpunktierte Position aus der Ecke gefahren und kann dann aus dem Bereich der Ecke nach oben entfernt werden.

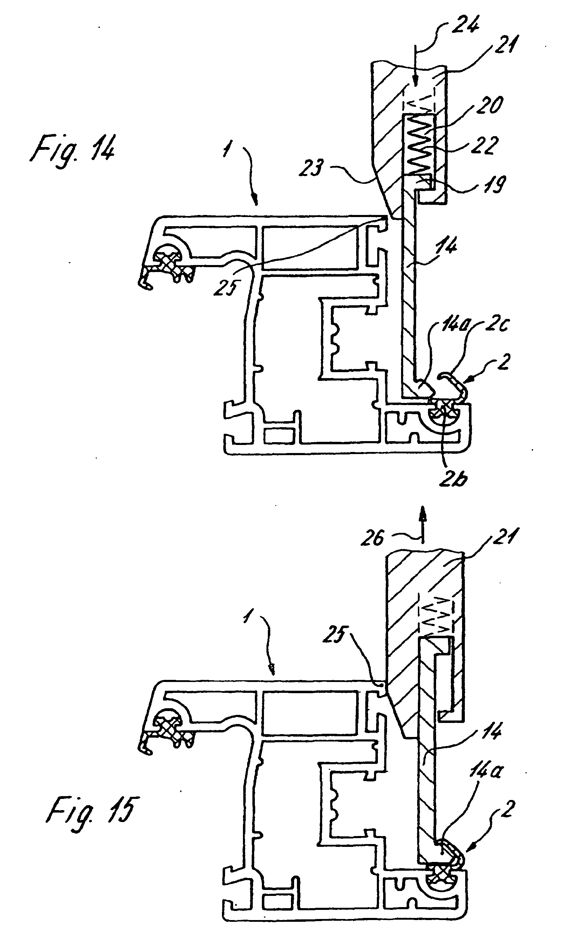

Die Fig. 14 und 15 zeigen ein Ausführungsbeispiel für das Einfahren des winkelförmigen Stempels 14 in die Innenkontur der Dichtung 2, und zwar mit seinem Schenkel 14a. Aus der Fig. 14 entnimmt man, daß der Stempel 14 außerhalb der Dichtlippe 2c zum Rahmenprofil 1 hin bis auf den Befestigungsfuß 2b der Dichtung heruntergefahren wird.

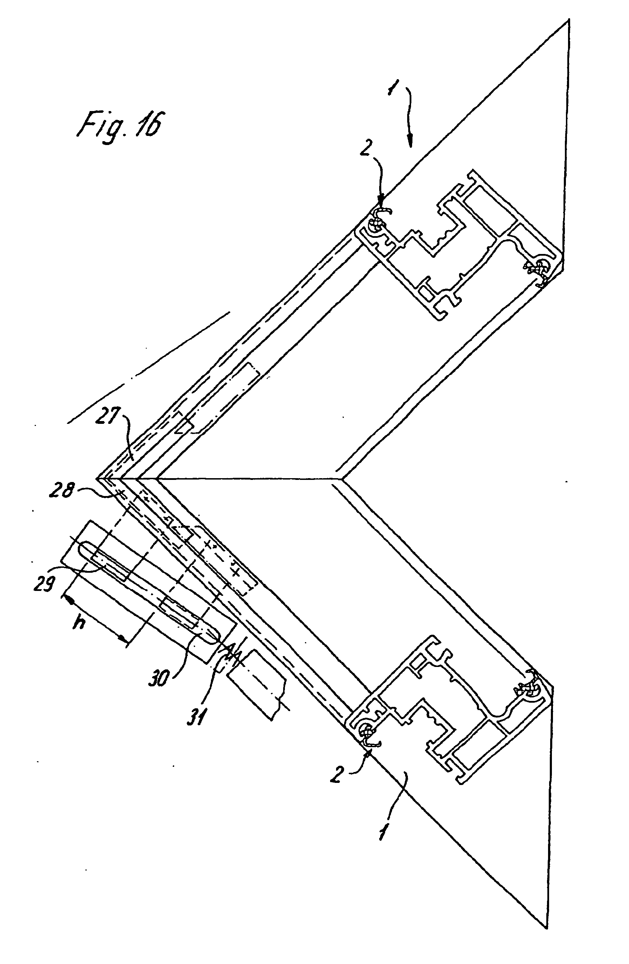

Das Stempelende 19, an dem dem seitlich vorspringenden Schenkel 14a abgewandten Ende erstreckt sich in eine Federkammer 20 eines Aufnahmeteils 21 und wird dort mit einer Feder 22 belastet. Das Aufnahmeteil ist mit einer Schrägfläche 23 ausgerüstet, die im Zuge des Herunterfahrens des Aufnahmeteils in Richtung des Pfeiles 24 mit einer Profilkante 25 zusammenwirkt, so daß das Aufnahmeteil mit dem Stempel von dem Rahmenprofil 1 weg bewegt und der Schenkel 14a des Stempels 14 in die Innenkontur der Dichtung 2 eingeführt wird. Die Endstellung ist in der Fig. 15 aufgezeigt. Das Entformen erfolgt durch eine Bewegung des Aufnahmeteils 21 in Richtung des Pfeiles 26. Die Fig. 16 zeigt eine andere Konstruktion eines Stempels zum Abdecken der Innenkontur der Dichtung 2. Der Stempel setzt sich aus den Teilen 27 und 28 zusammen, die sich in der Gehrungsfläche bündig schließend berühren. Die Stempel 27 und 28 weisen ein antreibbares Führungsstück 29 auf, das in einer schrägverlaufenden Führungsbahn 30 einen Hub h ausführen kann. Der Antrieb des Führungsstücks 29 kann pneumatisch oder hydraulisch erfolgen. Durch den Antrieb können die Stempel 27 und 28 in die jeweilige Wirkposition gefahren werden. Lediglich parallel zu den Rahmenprofilen muß ein Federausgleich 31 vorgesehen werden, um die Bewegungen während des Schweißvorganges, und zwar das Abarbeiten der Schweißzugabe, auszugleichen.

Während des Aufheizvorganges nehmen die Stempel 27 und 28 die rückwärtige Position ein, die in der Fig. 16 strichtpunktiert dargestellt ist. In dieser Position werden die Stempel durch den Schweißspiegel nicht aufgeheizt. Nach dem Wegschwenken des Schweißspiegels werden die Stempel 27 und 28 unter die Dichtlippe der Dichtung 2 im Eckbereich gefahren.

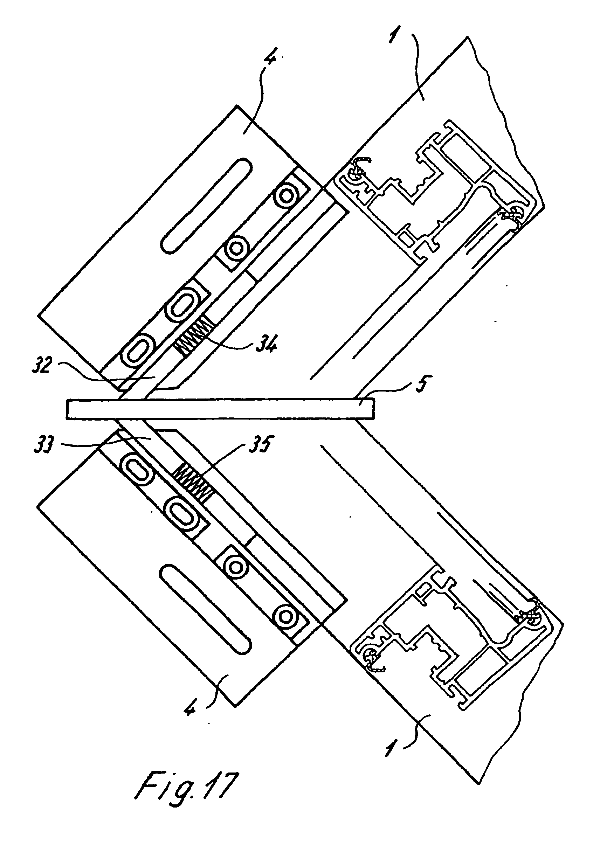

Eine weitere konstruktive Lösung ist in der Fig. 17 aufgezeigt, in der die Stempel 32 und 33 in den Vorrichtungsteilen 4 gelagert sind, die die Schweißraupenbegrenzungen bzw. Beilagen bilden.

Die Stempel 32, 33 sind durch in Richtung auf die Gehrungsecke wirkende Federn 34,35 belastet. In der aufgezeigten Betriebslage, also während des Aufheizvorganges mittels des Schweißspiegels 5 liegen die Stempel 32,33 mit ihrem der Gehrungsecke zugewandten Ende am Schweißspiegel an. Nach dem Entfernen des Schweißspiegels und der Zusammenführung der plastifizierten Rahmenprofile zum eigentlichen Schweißvorgang stoßen dann die Stempel mit ihren der Gehrungsecke zugewandten Stirnflächen gegeneinander und sorgen für eine flächenbündige Abdeckung der Innenkontur der Dichtungen im Gehrungsbereich.

### Bezugszeichenliste

- 1: Rahmenprofil
- 1a: Rahmenprofil
- 1b: Gehrungsfläche
- 1c: Linie
- 2: Dichtung
- 2a: Verankerungsnut
- 2b: Befestigungsfuß
- 2c: Dichtlippe
- 3: Dichtung
- 3a: Verankerungsnut
- 3b: Befestigungsfuß
- 3c: Dichtlippe
- 4: Vorrichtungsprofil
- 5: Schweißspiegel
- 6: Schweißraupe
- 7: Rahmenprofil
- 8: Anschlagdichtung
- 9: Glasanlagedichtung
- 10: Linie
- 11: Linie
- 12: Stempel
- 13: Stempel
- 14: Stempel
- 14a: Schenkel
- 15: Stempel
- 15a: Schenkel
- 16: Vorrichtungsteil
- 17: Abdeckteil
- 18: Abdeckteil
- 19: Stempelende
- 20: Federkammer
- 21: Aufnahmeteil
- 22: Feder
- 23: Schrägfläche
- 24: Pfeil
- 25: Profilkante
- 26: Pfeil
- 27: Teil
- 28: Teil
- 29: Führungsstück
- 30: Führungsbahn
- 31: Federausgleich
- 32: Stempel
- 33: Stempel
- 34: Feder
- 35: Feder

## Patentansprüche

1. Verfahren zum Verschweißen von auf Gehrung geschnittenen Rahmenprofilen (1, 1a) aus Kunststoff mit eingezogenen, über die gesamte Profillänge sich erstrekkenden, aus einem Befestigungsfuß und mindestens einer Dichtlippe (2c, 3c) bestehenden Dichtungen (2, 3) aus einem schweißbaren Material, vorzugsweise aus einem Thermoplasten, für Fenster oder Türen, bei dem die Gehrungsflächen und die benachbaren Rahmenprofilbereiche durch einen Schweißspiegel (5) auf die Verschweißungstemperatur aufgeheizt werden, der Schweißspiegel (5) aus dem Bereich der Gehrungsflächen entfernt wird und die Gehrungsflächen der Rahmenprofile zusammengepreßt werden, **dadurch gekennzeichnet, daß** für den Zeitraum der Verschweißung der Rahmenprofile (1,1a) und der Dichtungen (2 und/oder 3) die von der Dichtlippe (2c und/oder 3c) und dem Befestigungsfuß (2b und/oder 3b) gebildete Innenkontur der Dichtung (2,3) in und benachbart der Gehrungsebene durch mindestens ein Formteil konturgerecht oder nahezu konturgerecht abgedeckt wird, um während der Verschweißung der Rahmenprofile (1, 1a) und der Dichtungen (2, 3) in diesem Bereich die Ausbildung einer Schweißraupe zu verhindern, und das Formteil nach der Verschweißung aus dem Bereich der Dichtung (2,3) bewegt wird.

2. Verfahren nach Anspruch 1, **dadurch gekennzeichnet, daß** für den Zeitraum der Verschweißung auch die Außenkontur der Dichtung (2 und/oder 3) benachbart der Gehrungsebene durch Formteile abgedeckt wird, in der Gehrungsebene ein Spalt für den Austritt der Schweißraupe verbleibt und nach der Verschweißung der Rahmenprofile (1,1a) und der Dichtungen (2 und/oder 3) die Formteile und die sich an der Außenseite der Dichtung gebildete Schweißraupe entfernt werden.

## Claims

1. Method of welding mitre-cut plastic frame profiles (1, 1a) having incorporated seals (2, 3) which extend over the entire profile length, consist of a fastening foot and at least one sealing lip (2c, 3c) and are made of a weldable material, preferably of a thermoplastic, for windows or doors, in which method the mitred surfaces and the adjacent frame profile regions are heated to the welding temperature by means of a welding mirror (5), the welding mirror (5) is removed from the region of the mitred surfaces, and the mitred surfaces of the frame profiles are pressed together, **characterized in that**, during the period of welding the frame profiles (1, 1a) and the seals (2 and/or 3), the inner contour of the seal (2, 3) formed by the sealing lip (2c and/or 3c) and by the fastening foot (2b and/or 3b) is covered, in and adjacent to the mitre plane, by at least one moulding part in a contour-fitting or virtually contour-fitting manner, in order to prevent the formation of a welding bead in this region during the welding of the frame profiles (1, 1a) and the seals (2, 3), and the moulding part is moved from the region of the seal (2, 3) after the welding.

2. Method according to Claim 1, **characterized in that**, during the period of welding, the outer contour of the seal (2 and/or 3) adjacent to the mitre plane is also covered by moulding parts, a gap for the emergence of the welding bead remains in the mitre plane and, after the welding of the frame profiles (1, 1a) and of the seals (2 and/or 3), the moulding parts and the welding bead formed on the outside of the seal are removed.

## Revendications

1. Procédé de soudage de profilés d'encadrement (1, 1a) en matière plastique coupés en onglet, pour la réalisation de fenêtres ou portes, lesquels sont munis de joints d'étanchéité (2, 3) insérés, s'étendant sur toute la longueur du profilé, formés par une base de fixation et au moins une lèvre d'étanchéité (2c, 3c) et réalisés dans un matériau soudable, de préférence un thermoplastique, dans lequel procédé les faces en onglet et les zones voisines du profilé d'encadrement sont chauffées à la température de soudage par l'intermédiaire d'un miroir de soudage (5), le miroir de soudage (5) est retiré de la zone des faces en onglet et les faces en onglet des profilés d'encadrement sont pressées l'une contre l'autre, **caractérisé en ce que**, pendant la durée du soudage des profilés d'encadrement (1, 1 a) et des joints d'étanchéité (2 et/ou 3), le contour intérieur du joint d'étanchéité (2, 3), formé par la lèvre d'étanchéité (2c et/ou 3c) et la base de fixation (2b et/ou 3b), est recouvert dans le plan des onglets et au voisinage de celui-ci de manière conforme au contour ou pratiquement conforme au contour par au moins une pièce moulée pour empêcher pendant le soudage des profilés d'encadrement (1, 1a) et des joints d'étanchéité (2, 3) la formation d'un cordon de soudure dans cette zone, et la pièce moulée est déplacée hors de la zone du joint d'étanchéité (2, 3) après le soudage.

2. Procédé selon la revendication 1, **caractérisé en ce que**, pendant la durée du soudage, le contour extérieur du joint d'étanchéité (2 et/ou 3) est également recouvert par des pièces moulées au voisinage du plan des onglets, une fente subsiste dans le plan des onglets pour laisser sortir le cordon de soudure et, après le soudage des profilés d'encadrement (1, 1a) et des joints d'étanchéité (2 et/ou 3), les pièces moulées et le cordon de soudure formé sur la face extérieure du joint d'étanchéité sont enlevés.
